# EUROPÄISCHE PATENTANMELDUNG

(11) **EP 0 780 224 A2**
(43) Veröffentlichungstag der Anmeldung: **25.06.1997**
(21) Anmeldenummer: 96119905.6
(22) Anmeldetag: 12.12.1996
(51) Int. Cl.: B32B 15/08, B32B 5/32, B63B 3/68, E04B 1/94

(54) **Isolationsschichten für brandgeschützte Räume**

(30) Priorität: 20.12.1995 DE 19547672
(71) Anmelder: Röhm GmbH, 64293 Darmstadt (DE)
(72) Erfinder: Seibert, Hermann, 67663 Kaiserslautern (DE)

(57) **Zusammenfassung**

Die Erfindung betrifft kombinierte Isolationsschichten ISS, vorzugsweise zur Anwendung im Schiffsbau, aufgebaut aus
i) einer aus Metallblech bestehenden Außenschicht AS, kombiniert mit
ii) einer Melaminschicht MSS
iii) einer Aluminiumblech-Schicht
iv) einer beidseitig mit einem Phenolharz-Prepreg PNP beschichteten Kernschicht eines Hartschaumstoffs HSS.

## Beschreibung

### Gegenstand der Erfindung

Die Erfindung betrifft neuartige Isolationsschichten für brandgeschützte Räume, insbesondere im Schiffsbau.

### Stand der Technik

Die Bereitstellung brandgeschützter Räume ist ein Thema, das die Entwicklung der Zivilisation seit langem begleitet. Die chemische Industrie hat maßgeblich zum Brandschutz beigetragen durch die Entwicklung feuerresistenter Materialien sowohl auf anorganischer als auch auf organischer Basis. (Vgl. Kirk-Othmer, Encyclopedia of Chemical Technology, 3rd Ed. Vol. 10, 348-444, J. Wiley, 1980; ibidem Vol. 13, 598-605, J. Wiley, 1981).

Mehr noch als im privaten Bereich hat sich der Brandschutz und auch im öffentlichen und im militärischen Bereich entwickelt, nicht zuletzt unter dem Aspekt der Gefährdung einer größeren Anzahl von Menschenleben.

Außer in ortsfesten Verkehrs- bzw. Versammlungszentren, wie Bahnhöfen, Hotels, Konzert- und Theatersälen, Hörsälen, Kirchen, Krankenhäusern, Banken, öffentlichen und privaten Verwaltungsgebäuden usw. treten Menschenansamlungen im Bereich der Bahn, des Luftverkehrs und des Schiffsverkehrs auf. Bei den beiden letzteren Verkehrsmitteln spielt das Moment der eingeschränkten Fluchtmöglichkeit im Falle eines Feuers eine große, auch durch kleinere oder größere Katastrophen immer wieder ins allgemeine Bewußtsein gehobene Rolle.
Wegen des besonderen Gefährdungspotentials in der modernen Massenbeförderung liegt hier begreiflicherweise ein Schwerpunkt des öffentlichen Interesses, was sich u.a. in einer restriktiven Gesetzgebung und an einer strikten nationalen und internationalen Genehmigungs- bzw. Zulassungspraxis niedergeschlagen hat. Zu den naheliegenden Schutzmaßnahmen gehört eine möglichst optimale thermische Isolierung potentiell gefährdeter Räume.

Thermische Isolierung wird gewöhnlich definiert als der Widerstand den ein Material oder Materialschichten dem Wärmeübergang entgegensetzen. (Vgl. z.B. ASTM C 168).

Im Schiffsbau gelten Brandvorschriften, die von der International Maritime Organisation (IMO) festgelegt wurden.

IMO schriebt vor, daß Passagier-, Fracht- und Fischereischiffe mit bestimmten Brandschutzmaßnahmen ausgerüstet sein müsssen. IMO unterscheidet unterschiedliche Baugruppen des Schiffes, die durch eine geeignete Isolationsschicht vor zu hoher Temperatureinwirkung geschützt werden müssen.
In der Resolution A.754(18) werden diese Baugruppen beschrieben und festgelegt welchen Anforderungen die entsprechende Isolationsschicht genügen muß. Die Isolationsschichten werden nach einem genau festgelegten Ablauf einseitig mit Temperatur beaufschlagt. Dies geschieht wie folgt:
Temperatur nach Ablauf der ersten 5 min 576°C
Temperatur nach Ablauf der ersten 10 min 679°C
Temperatur nach Ablauf der ersten 15 min 738°C
Temperatur nach Ablauf der ersten 30 min 841°C
Temperatur nach Ablauf der ersten 60 min 945°C

An der Wärmequelle abgewandten Seite der Isolationsschicht darf die gemessene Temperatur dabei 140°C nicht überschreiten.

Je nach Baugruppe und Zeitdauer der Temperaturbeaufschlagung werden folgende Klassifizierungen unterschieden:
- A-60: 60 min = härtester Test
- A-30: 30 min
- A-15: 15 min
- A-0: 0 min
- B-30: 30 min
- B-15: 15 min
- B-0: 0 min
- F-30: 30 min
- F-15: 15 min
- F-0: 0 min

Die Technik greift bevorzugt auf mehrschichtiges Thermoisoliermaterial zurück, das reflektierende Metall-Außenschichten und Mineralwolle-Innenschichten aufweist (vgl. Kirk-Othmer, Vol. 13, loc.cit., pg. 596). Im Schiffsbau werden derzeit Isolationsschichten mit der Konfiguration Stahlblech/Gesteinswolle/Stahlblech verwendet. Je nach den Anforderungen an die Isolationsschicht variieren die Dicken der einzelnen Schichten und damit natürlich die Gesamtdicke und das Flächengewicht.

### Aufgabe und Lösung

Grundsätzlich kann gesagt werden, daß derlei Isolationsschichten ein hohes Flächengewicht aufweisen. Dies gilt ganz besonders für A-60, A-30, B-30 und F-30 Isolationsschichten. Aufgrund des hohen Flächengewichtes der existierenden Isolationsschichten ergeben sich erhebliche Gewichtsprobleme und zusätzliche Probleme wegen einer zu hohen Schwerpunktslage bei großen Passagierschiffen. Da im Schiffsbau ein Trend zu immer schnelleren Schiffen zu beobachten ist, sucht man auch bei den Brandisolationen nach Leichtbaulösungen um Gewicht zu sparen, Antriebsleistung zu sparen, den Energieverbrauch zu senken.

Aus den vorstehenden Angaben wird der Wunsch der Technik nach leichteren Isolationsschichten, insbesondere für den Schiffsbau deutlich, die selbstverständlich den geltenden Sicherheitsbestimmungen genügen müssen.

Gesucht wird speziell nach einer Isolationsschicht, die folgenden Anforderungen genügt:
1. Klassifizierung A-60, A-30, A-15 / B-30, B-15 / F-30, F-15
2. Gesamtdicke < 80 mm, für A-60
3. Flächengewicht < 20 kg/m², für A-60

Die Isolationsschicht soll, auch unter Einfluß der Testtemperatur/Testdauer ihre strukturellen Eigenschaften nicht verlieren.

Die Auswahl der in Frage kommenden Werkstoffe erscheint primär dadurch begrenzt zu sein, daß kohlenstoffhaltige Materialien, beispielsweise organische, synthetische Polymere, grundsätzlich als brennbar eingestuft werden müssen. (Kirk-Othmer, Vol. 10, loc.cit., pg. 348). Allerdings muß auch Aluminium als unter geeigneten Bedingungen brennbar eingeordnet werden.

Es wurde nun gefunden, daß völlig unerwarteterweise die erfindungsgemäßen Isolationsschichten die Anforderungen der Schiffsbautechnik, insbesondere den Brand-Isolationstest gemäß IMO-Spezifikation A-60 erfüllen. Die erfindungsgemäßen kombinierten Isolationsschichten ISS sind aufgebaut aus
i) einer aus Metallblech, beispielsweise Aluminiumblech bestehenden Außenschicht AS mit vorzugsweise 0,5 mm Schichtdicke, kombiniert mit
ii) einer Melaminschaumschicht MSS mit vorzugsweise 42 mm Schichtdicke,
iii) einer Metallblech, beispielsweise Aluminiumblech-Schicht
   mit vorzugsweise 0,5 mm Schichtdicke
iv) einer beidseitig mit einem Phenolharz-Prepreg PNP mit vorzugsweise 0,3 mm Schichtdicke beschichteten Kernschicht eines Hartschaumstoffs HSS, wie beispielsweise Poly(meth)acrylimidschaumstoff (PMI-Schaumstoffe) PMI-SS mit vorzugsweise 30 mm Schichtdicke.
   Als Richtwert für die Gesamtdicke der kombinierten Isolationsschichten ISS sei ein Wert von 70 - 75 mm, speziell 73,6 mm angegeben, bei einem Flächengewicht von 20 ± 1 kg/m², vorzugsweise 19 kg/m².

Die einzelnen Schichtbestandteile der Isolationsschicht ISS sind an sich bekannt:
Als Melaminschaum MSS gemäß der vorliegenden Erfindung können an sich bekannte Handelsprodukte (vgl. Ullmann's Encylopedia of Industrial Chemistry, 5th Ed., Vol. A11, pg. 453, VCH 1988), beispielsweise das Produkt RECORE® der Firma GLASIS AB, Söråker (Schweden), mit einem Flächengewicht von 210 kg/m³ eingesetzt werden. Durch Variation von Dicke und Dichte der Melaminschaumschicht ii)
kann - wie auch durch Variation der Dicke der Schicht iv) können für alle oben genannten Klassifizierungen gewichtsoptimierte Aufbauten gefunden werden, die deutlich leichter sind als die Systeme des Standes der Technik.

Als Hartschaum-Kernschicht der Schichtenkombination iv) kommen an sich bekannte Hartschäume auf Basis von Poly(meth)acrylimid, z.B. PMI-Schaumstoffe, von Polymethylmethacrylat (PMMA), Polyvinylchlorid (PVC), Acrylnitril-Butadien-Styrolcopolymeren (ABS), Polycarbonat (PC), infrage, desweiteren Hartschäume auf Basis von Polyolefinen, Celluloseacetat, Epoxiharzen, Polystyrol, Polyetherimid, Polyamid, Polyimid, Polyphenylenoxid, Polysulfon und Polyurethan.
Nähere Angaben sind z.B. H.F. Mark et al., Encyclopedia of Polymer, Science & Engineering, Vol. 3, 1-49, J. Wiley, 1985; Ullmann's Enyclopedia of Industrial Chemistry 5th Ed. Vol. A 11, 435-464 VCH 1988 oder DE-A 42 07 057 zu entnehmen.
Als Prepregs der Schicht iv) haben sich insbesondere Phenol-Novolac-Prepregs bewährt.
Die vorliegende Erfindung sei am Beispiel von Polymethacrylimid-Schaumstoffen näher erläutert (vgl. Ullmann's Encyclopedia A 11 loc.cit., pg. 456).

Die Polymethacrylimidschaumstoffe (PMI-SS) sind z.B. in den GB-A 1 078 425 und 1 045 229 sowie in DT-PS 18 17 156 beschrieben worden. Sie enthalten als charakteristische Einheiten cyclische Strukturen mit einer Imidgruppe. Ihre Wärmeformbeständigkeit (nach DIN 53 424) liegt gewöhnlich im Bereich 180 - 220°C. Derartige PMI-Polymerschäume sind im Handel und unter dem Markennamen ROHACELL® der Röhm GmbH erhältlich. Vorzugsweise wird eingesetzt das Produkt ROHACELL 51S.

Im vorliegenden Fall liegt das Flächengewicht - des Polymethacrylimid-Schaumstoffs (PMI-SS) der Schicht iv) üblicherweise bei ∼ 52 ± 12 kg/m³.
Compositmaterialien, wie sie in der Schicht iv) vorliegen, sind - wie erwähnt - ebenfalls an sich bekannt (vgl. B. Carlowitz Hrsg. Die Kunststoffe, Kunststoff-Handbuch, Bd. 1, 321, 484, C. Hanser, 1990).
Für den Fall einer PMI-Kernschicht kann z.B. auf GB 2 134 845, DE-A 29 27 122, DE-A 33 04 862; US 4,316,934; EP 0 22 168; EP-A 310 561 zurückgegriffen werden.

Zur Herstellung der Schicht iv) wird zweckmäßig auf die entsprechend dimensionierte Schaumstoff-Platte innerhalb einer Form das Prepreg-Material in der dem Gewicht angemessenen Menge aufgelegt und mit Preßdruck beaufschlagt. Das faserhaltige Kunststoffmaterial der Prepregs erweicht oberflächlich und es erfolgt eine Verankerung der Schicht in den Poren der angrenzenden Schaumstoffschicht.
Typische Arbeitsbedingungen, bei denen die Prepregs zu fließen und zu härten beginnen, sind Drucke von mehr als 1 N/mm² und Temperaturen im Bereich 60 - 180°C. Die Preßdauer beträgt üblicherweise 12 min - 120 min,
ein besonders zweckmäßiger Bereich liegt zwischen 12 und 30 Minuten.
Die als Bestandteile der Schicht iv) verwendeten Prepregs stellen - wie üblich - schichtförmige Harze mit eingelagerten Fasern, ggf. in Form von Strängen, Geweben oder Vliesen dar, die bei Raumtemperatur fest, beim Erhitzen fließfähig sind. Die Harze bestehen aus einem Phenolharz, beispielsweise einem Phenol-Novolac-Duroplast.
(Vgl. H.F. Mark et al., Encyclopedia of Polymer Science & Engineering, Vol. 11, 62-84, J. Wiley, 1988).

Die einzelnen Schichten der kombinierten Isolationsschichten ISS können in bekannter Weise gefügt oder innerhalb eines gemeinsamen Rahmens verwendet werden.

Die erfindungsgemäßen, kombinierten Isolationsschichten ISS erfüllen, wie bereits ausgeführt, die Anforderungen des Standes der Technik, insbesondere die von der IMO festgelegten Standards, wobei durch Variation der Schichtdicken der Schichten ii) und iv) Anpassung an alle genannten Klassifikationen erreicht werden kann.

### Vorteilhafte Wirkungen

Die erfindungsgemäßen, kombinierten Isolationsschichten gestatten die Bereitstellung brandgeschützter Räume, die insbesondere den restriktiven Vorschriften des Schiffbaus genügen. Sie bedeuten ein erhebliches Gewichtseinsparungspotential und tragen damit auch zu einer besseren Ausnutzung von Treibstoffen sowie einer höheren Rentabilität im Schiffstransport bei.

## Patentansprüche

1. Kombinierte Isolationsschichten ISS, aufgebaut aus
i) einer aus Metallblech bestehenden Außenschicht kombiniert mit
ii) einer Melaminschaumschicht MSS
iii) einer Metallblech-Schicht
iv) einer beidseitig mit einem Phenolharz-Prepreg PNP beschichteten Kernschicht eines Hartschaumstoffs HSS.

2. Kombinierte Isolationsschichten ISS gemäß Anspruch 1, dadurch gekennzeichnet, daß die Schicht i) und/oder die Schicht iii) aus Aluminiumblech besteht.

3. Kombinierte Isolationsschichten ISS gemäß Anspruch 1, dadurch gekennzeichnet, daß die Gesamtdicke der kombinierten Isolationsschicht 70 -75 mm beträgt bei einem Flächengewicht von 20 ± 1 kg/m².

4. Kombinierte Isolationsschichten ISS gemäß den Ansprüchen 1 bis 3, dadurch gekennzeichnet, daß
die Schicht i) eine Schichtdicke von ca. 0,5 mm
die Schicht ii) eine Schichtdicke von ca. 42 mm
die Schicht iii) eine Schichtdicke von ca. 0,5 mm
die Schicht iv) eine Schichtdicke von ca. 30 mm und Prepregschichten PNP von jeweils ca. 0,3 mm
besitzt.

5. Kombinierte Isolationsschichten ISS gemäß den Ansprüchen 1 bis 4, dadurch gekennzeichnet, daß sie den Brandvorschriften im Schiffsbau der International Maritime Organisation genügen.

6. Verwendung der kombinierten Isolationsschichten ISS gemäß den Ansprüchen 1 bis 5 im Schiffsbau.

7. Verwendung der kombinierten Isolationsschichten ISS gemäß den Ansprüchen 1 bis 6 zur Herstellung brandgeschützter Räume.
